(19) **Europäisches Patentamt**
**European Patent Office**
**Office européen des brevets**

(11) **EP 3 453 583 B1**

(12) **FASCICULE DE BREVET EUROPEEN**

(45) Date de publication et mention
de la délivrance du brevet:
**09.06.2021  Bulletin 2021/23**

(51) Int Cl.:
*B60W 30/14* *(2006.01)*          *B60W 30/16* *(2020.01)*
*B60W 40/04* *(2006.01)*          *B60W 50/00* *(2006.01)*
*B60K 31/00* *(2006.01)*

(21) Numéro de dépôt: **18190977.1**

(22) Date de dépôt: **27.08.2018**

(54) **PROCEDE DE DETERMINATION D'UNE VITESSE A ATTEINDRE POUR UN PREMIER VEHICULE PRECEDE PAR UN DEUXIEME VEHICULE, EN PARTICULIER POUR UN VEHICULE AUTONOME**

VERFAHREN ZUR BESTIMMUNG EINER ZU ERREICHENDEN GESCHWINDIGKEIT EINES ERSTEN FAHRZEUGS, DEM EIN ZWEITES FAHRZEUG VORAUSFÄHRT, INSBESONDERE FÜR EIN AUTONOMES FAHRZEUG

METHOD FOR DETERMINING A SPEED TO BE REACHED FOR A FIRST VEHICLE PRECEDED BY A SECOND VEHICLE, IN PARTICULAR FOR AN AUTONOMOUS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.09.2017  FR 1758212**

(43) Date de publication de la demande:
**13.03.2019  Bulletin 2019/11**

(73) Titulaire: **IFP Energies nouvelles**
**92852 Rueil-Malmaison Cedex (FR)**

(72) Inventeurs:
• **LEON OJEDA, Luis**
**92800 PUTEAUX (FR)**
• **HAN, Jihun**
**75017 PARIS (FR)**
• **SCIARRETTA, Antonio**
**92500 RUEIL-MALMAISON (FR)**
• **THIBAULT, Laurent**
**69002 LYON (FR)**
• **DE NUNZIO, Giovanni**
**69600 OULLINS (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 219 092          DE-A1-102009 028 742**
**DE-A1-102011 002 275**

• **MD ABDUS SAMAD KAMAL ET AL: "Model Predictive Control of Vehicles on Urban Roads for Improved Fuel Economy", IEEE TRANSACTIONS ON CONTROL SYSTEMS TECHNOLOGY, IEEE SERVICE CENTER, NEW YORK, NY, US, vol. 21, no. 3, 1 mai 2013 (2013-05-01), pages 831-841, XP011504782, ISSN: 1063-6536, DOI: 10.1109/TCST.2012.2198478**
• **SCIARRETTA ANTONIO ET AL: "Optimal Ecodriving Control: Energy-Efficient Driving of Road Vehicles as an Optimal Control Problem", IEEE CONTROL SYSTEMS, IEEE, USA, vol. 35, no. 5, 1 octobre 2015 (2015-10-01), pages 71-90, XP011669319, ISSN: 1066-033X, DOI: 10.1109/MCS.2015.2449688 [extrait le 2015-09-14]**

**Description**

La présente invention concerne le domaine de la navigation des véhicules, et en particulier le domaine de la détermination d'une vitesse qui optimise l'énergie consommée, notamment pour un véhicule autonome.

Selon l'Agence Internationale de l'Energie, plus du 50% du pétrole utilisé dans le monde est destiné au secteur des transports, dont plus des trois quarts pour les transports routiers. Selon cette même agence, le secteur des transports est responsable pour presque un quart (23.8%) des émissions de gaz à effet de serre et plus d'un quart (27.9%) des émissions de $CO_2$ en Europe en 2006.

Il est donc de plus en plus important d'augmenter l'efficacité énergétique des déplacements routiers, pour réduire la consommation d'énergie, qu'il s'agisse d'énergies fossile ou électrique. Pour y parvenir, les systèmes d'assistance à la conduite (ADAS, de l'anglais « Advanced Driver Assistance Systems ») représentent une solution prometteuse, car économique (car on peut utiliser simplement le téléphone intelligent du conducteur ou un système embarqué) et non intrusive (car on n'a pas besoin d'apporter des modifications aux composants mécaniques du véhicule).

Parmi les systèmes d'assistance à la conduite, la demanderesse a développé un procédé de détermination d'un indicateur d'éco-conduite, décrit notamment dans le brevet FR 2994923 (US 9,286,737). Ce procédé donne satisfaction, notamment du fait qu'il permet de déterminer un indicateur énergétique sur un tronçon de trajet effectué d'un véhicule. Néanmoins, il est souhaitable de prendre en compte plus précisément les conditions de circulation, et en particulier le comportement du véhicule précédant le véhicule considéré. De plus, il est souhaitable de déterminer en temps réel une vitesse optimale prédictive d'un point de vue énergétique pour un segment de route à venir.

Les documents :

- MD ABDUS SAMAD KAMAL ET AL: "Model Prédictive Control of Vehicles on Urban Roads for Improved Fuel Economy", IEEE TRANSACTIONS ON CONTROL SYSTEMS TECHNOLOGY, IEEE SERVICE CENTER, NEW YORK, NY, US, vol. 2 1 , no. 3, 1 mai 2013, pages 831-841 , XPO11504782, ISSN: 1063-6536, DOI: 10.1 109/TCST.2012.2198478,
- DE 102011002275 A1,
- EP 2 219 092 A
- SCIARRETTA ANTONIO ET AL: "Optimal Ecodrrving Control :.Energy-Efficient Driving of Road Vehicles as an Optimal Control Problem", IEEE CONTROL SYSTEMS, IEEE, USA, vol. 35, no. 5, 1 octobre 2015, pages 71-90, XPO11669319, ISSN: 1066-033X, DOI: 10.1 109/MCS.2015.2449688 [extrait le 2015-09-14]

décrivent des procédés de fonctionnement pour des véhicules automobiles.

Par ailleurs, les constructeurs développent actuellement des véhicules autonomes (c'est-à-dire des véhicules ne nécessitant pas l'intervention d'un utilisateur pour se déplacer). Les véhicules autonomes doivent prendre en compte le contexte de circulation du véhicule (par exemple : trafic, limitations de vitesse, etc.) ainsi que des contraintes sécuritaires pour en déterminer son contrôle.

Le procédé d'éco-conduite décrit dans le brevet FR 2994923 (US 9,286,737) cité précédemment ne permet pas le contrôle d'un véhicule autonome.

Différents procédés de contrôle de la vitesse et du déplacement de véhicules autonomes ont été développés.

Par exemple, le brevet US 54487479 traite du contrôle de la vitesse du contrôle d'un véhicule autonome dans un objectif d'évitement de la collision avec un véhicule qui le précède. Toutefois, le contrôle décrit dans ce brevet ne minimise pas l'énergie consommée par le véhicule. Par conséquent, ce contrôle n'est pas optimal en termes d'énergie consommée.

Pour pallier ces inconvénients, la présente invention concerne un procédé et un produit programme d'ordinateur selon les revendications indépendantes.

Le procédé selon l'invention

Le procédé selon l'invention est défini par la revendication indépendante 1.

Selon un mode de réalisation de l'invention, on détermine la vitesse optimale dudit premier véhicule par une approche du type MPC.

Avantageusement, ladite approche de type MPC est réalisée sur un horizon temporel déterminé en prenant en compte les conditions de trafic.

Conformément à une mise en œuvre, la minimisation de l'énergie consommée est contrainte par les conditions de trafic et/ou par les limitations de vitesse et/ou par l'infrastructure routière, sur laquelle circule ledit premier véhicule.

De préférence, lesdites conditions de trafic, les limitations de vitesse et/ou l'infrastructure routière sont obtenues en temps réel par communication avec des services de données en ligne.

Selon un aspect, la minimisation est contrainte par une distance de sécurité entre ledit premier véhicule et ledit deuxième véhicule.

Conformément à un mode de réalisation de l'invention, le procédé comprend une étape de contrôle dudit premier véhicule avec ladite vitesse optimale.

De manière avantageuse, ledit premier véhicule est un véhicule autonome.

Alternativement, le procédé comprend une étape de comparaison soit entre la vitesse optimale déterminée et la vitesse atteinte par le conducteur dudit premier véhicule, soit entre l'énergie optimale déterminée au moyen de la vitesse optimale et l'énergie consommée par le premier véhicule, et une étape de détermination d'un indicateur de conduite énergétique au moyen de ladite comparaison.

Selon une mise en œuvre de l'invention, on détermine l'énergie optimale par minimisation d'une fonction J, de la forme $J = \int_0^T P_{source}(u, v)dt$ avec $P_{source}$ la puissance fournie par le moteur dudit premier véhicule, u le couple fourni par le moteur dudit premier véhicule, et v la vitesse dudit premier véhicule.

Conformément à une caractéristique le modèle dynamique dudit premier véhicule s'écrit de la forme : $m\dot{v} = F_t - F_a - F_r - F_g - F_b$ avec m la masse dudit premier véhicule, $F_t$ la force de traction, $F_a$ la force aérodynamique, $F_r$ la force de roulement, $F_g$ la force gravitationnelle, et $F_b$ la force de freinage mécanique.

Selon un aspect, ledit modèle dynamique du véhicule dépend de paramètres intrinsèques dudit véhicule.

Avantageusement, lesdits paramètres intrinsèques dudit véhicule sont obtenus depuis une base de données, ou sont indiqués par un utilisateur.

Selon l'invention on détermine la trajectoire dudit deuxième véhicule en déterminant sa position au moyen d'une équation du type : $s_{Leader} = s + \Delta s + v_{Leader}t + 1/2\, a_{Leader}t^2$ avec $s_{Leader}$ la position dudit deuxième véhicule, s la position dudit premier véhicule, $\Delta s$ la distance entre ledit premier véhicule et ledit deuxième véhicule, t le temps, $v_{Leader}$ la vitesse dudit deuxième véhicule et $a_{Leader}$ l'accélération dudit deuxième véhicule.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre schématiquement les étapes du procédé selon l'invention.

La figure 2 illustre les étapes du procédé selon un premier mode de réalisation de l'invention.

La figure 3 illustre les étapes du procédé selon un deuxième mode de réalisation de l'invention.

La figure 4 illustre une portion de route utilisée pour le premier exemple d'application.

La figure 5 illustre les courbes de la vitesse, de la position, du couple moteur et de l'énergie consommée pour une solution optimale énergétiquement, pour le véhicule précédant le véhicule considéré, pour un procédé selon l'art antérieur, et pour un procédé selon l'invention, dans le cadre d'un premier exemple.

La figure 6 illustre une courbe entre l'énergie consommée et le temps d'arrivée dans le cadre du premier exemple.

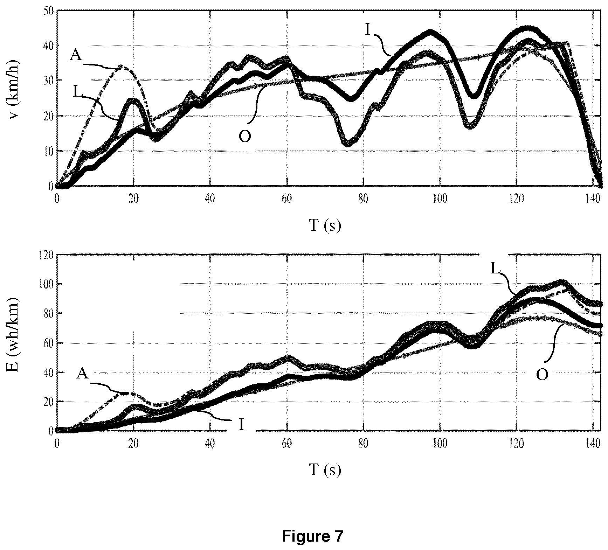

La figure 7 illustre les courbes de la vitesse, et de l'énergie consommée pour une solution optimale énergétiquement, pour le véhicule précédant le véhicule considéré, pour un procédé selon l'art antérieur, et pour un procédé selon l'invention, dans le cadre d'un deuxième exemple.

## Description détaillée de l'invention

La présente invention concerne un procédé de détermination d'une vitesse optimale à atteindre pour un premier véhicule, le premier véhicule étant précédé sur la route par un deuxième véhicule. Le premier véhicule est le véhicule considéré pour lequel on détermine la vitesse optimale à atteindre.

Le procédé selon l'invention peut être adapté à tout type de véhicule : véhicules thermiques, véhicules hybrides, véhicules électriques, etc. De plus, le véhicule peut être un véhicule autonome ou non.

Notations

Dans la suite de la description, on utilise les notations suivantes :

| | | |
|---|---|---|
| $v$ | Vitesse du premier véhicule | [m/s] |
| s | Position du premier véhicule | [m] |
| m | Masse du premier véhicule | [kg] |
| $\omega_m$ | Régime du moteur du premier véhicule | [tr/s] |

(suite)

| | | |
|---|---|---|
| $Ft$ | Effort de traction du véhicule à la roue | [N] |
| $F_a$ | Effort aérodynamique sur le véhicule | [N] |
| $F_r$ | Effort de frottement subi par le véhicule | [N] |
| $F_g$ | Effort normal subi par le véhicule (gravité) | [N] |
| $F_b$ | Effort de freinage mécanique | [N] |
| $\alpha$ | Angle d'inclinaison de la route | [rad] |
| $\rho_a$ | Densité de l'air | [kg/m³] |
| $A_f$ | Surface frontale du véhicule | [m²] |
| $c_d$ | Coefficient de résistance aérodynamique | [-] |
| $c_r$ | Coefficient de résistance au roulement | [-] |
| $g$ | Accélération gravitationnelle | [m/s²] |
| $r$ | Rayon de la roue | [m] |
| $Rt$ | Rapport de la transmission du véhicule | [-] |
| $\eta_t$ | Rendement de la transmission du véhicule | [-] |
| $T_m$ | Couple moteur | [Nm] |
| $P_{source}$ | Puissance du moteur du premier véhicule | [W] |
| U | Couple du moteur du premier véhicule | [Nm] |
| $s_{Leader}$ | Position du deuxième véhicule | [m] |
| $\Delta s$ | Distance entre le premier véhicule et le deuxième véhicule | [m] |
| $v_{Leader}$ | Vitesse du deuxième véhicule | [m/s] |
| $a_{Leader}$ | Accélération du deuxième véhicule | [m/s²] |
| t | Temps | [s] |
| $T_c$ | Pas de contrôle | [s] |
| T | Horizon de prédiction et optimisation (hypothèse de temps jusqu'au prochain point d'arrêt pouvant être basée sur une information trafic et cartographique) | [s] |
| n | Nombre de pas de contrôle | [-] |
| $\Delta$ | Horizon de contrôle | [s] |
| $V_a$ | Tension de la machine électrique | [V] |
| $i_a$ | Courant de la machine électrique | [A] |
| $R_a$ | Résistance de la machine électrique | [Ohm] |
| k | Constante de vitesse de la machine électrique | [-] |
| $t_0$ | Temps actuel au lancement d'une nouvelle optimisation | [s] |
| $s_f$ | Position du premier véhicule à l'instant T (égal à la longueur de la route jusqu'au prochain point d'arrêt) | [m] |
| $v_0$ | Vitesse du premier véhicule à l'instant $t_0$ (mesurée) | [m/s] |
| $v_f$ | Vitesse du premier véhicule à l'instant T (prédiction basée sur information traffic et carto graphique) | [m/s] |

Pour ces notations, la dérivée par rapport au temps est notée $\frac{d}{dt}$ ou par un point au-dessus de la variable considérée.

Le procédé selon l'invention comporte les étapes suivantes:

1) mesure (MES) de la distance, la vitesse et l'accélération du deuxième véhicule précédant le premier véhicule par au moins un capteur installé dans le premier véhicule

2) détermination de la trajectoire (POS) dudit deuxième véhicule au moyen desdites mesures en déterminant sa position au moyen d'une équation du type $s_{Leader} = s + \Delta s + v_{Leader}t + 1/2\ a_{Leader}t^2$ avec $s_{Leader}$ la position dudit deuxième véhicule, s la position mesuré dudit premier véhicule, $\Delta$s la distance entre ledit premier véhicule et ledit deuxième véhicule, t le temps, $v_{Leader}$ la vitesse mesurée dudit deuxième véhicule et $a_{Leader}$ l'accélération mesurée dudit deuxième véhicule

3) construction d'un modèle dynamique (MOD) dudit premier véhicule qui relie l'énergie consommée par ledit premier véhicule à la vitesse dudit premier véhicule

4) détermination d'une vitesse optimale (VIT) à atteindre par ledit premier véhicule par minimisation (MIN) de l'énergie consommée par ledit premier véhicule, au moyen dudit modèle dynamique, la minimisation de l'énergie consommée étant contrainte par ladite trajectoire dudit deuxième véhicule

Les étapes de construction du modèle dynamique du véhicule d'une part et de mesures et de détermination de la trajectoire du deuxième véhicule d'autre part peuvent être réalisées dans cet ordre, simultanément ou dans l'ordre inverse.

De préférence, le procédé selon l'invention est exécuté en temps réel.

Ainsi le procédé selon l'invention permet une détermination en temps réel de la vitesse optimale. De cette manière, la vitesse optimale déterminée peut être appliquée directement au véhicule.

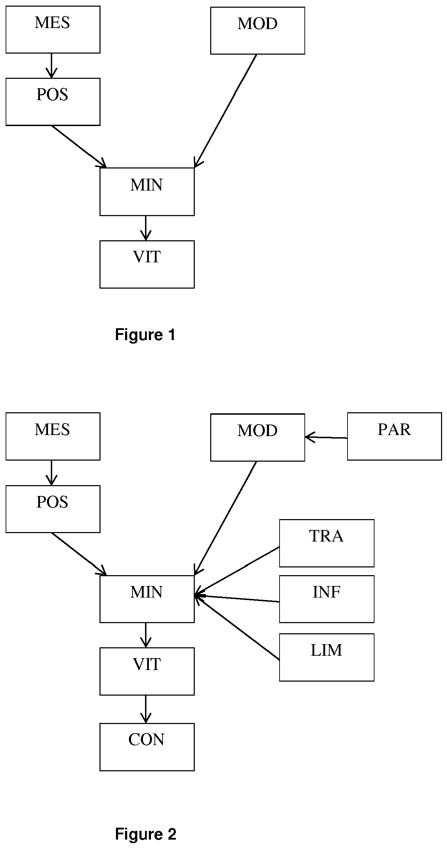

La figure 1 illustre, schématiquement et de manière non limitative, les étapes du procédé selon l'invention.

Selon un premier mode de réalisation de l'invention, le procédé peut comprendre une étape supplémentaire de contrôle du premier véhicule sur la base de la vitesse optimale déterminée. Ce contrôle consiste à appliquer la vitesse optimale déterminée (VIT) au premier véhicule.

La figure 2 illustre, schématiquement et de manière non limitative, les étapes du procédé selon le premier mode de réalisation de l'invention. En plus des étapes décrites en relation avec la figure 1, le procédé comporte les étapes facultatives suivantes :

- détermination du trafic routier (TRA), la détermination du trafic peut servir à la détermination de la vitesse optimale par minimisation de l'énergie consommée (MIN),
- détermination des infrastructures routières (INF), la détermination des infrastructures routières peut servir à la détermination de la vitesse optimale par minimisation de l'énergie consommée (MIN),
- détermination des limitations de vitesse (LIM), la détermination des limitations de vitesse peut servir à la détermination de la vitesse optimale par minimisation de l'énergie consommée (MIN),
- détermination des paramètres intrinsèques du véhicule (PAR), ces paramètres peuvent servir à la construction du modèle dynamique (MOD),
- contrôle du premier véhicule (CON), ce contrôle consiste à appliquer la vitesse optimale déterminée (VIT) au premier véhicule.

Les étapes de détermination du trafic routier (TRA), des infrastructures routières (INF), des limitations de vitesse (LIM) et des paramètres intrinsèques du véhicule (PAR) sont indépendantes. Il est donc possible de réaliser seulement une partie de ces étapes. De plus, ces étapes ne sont pas liées à l'étape de contrôle (CON) du premier véhicule. En d'autres termes, l'étape de contrôle (CON) du premier véhicule peut être réalisée sans ou avec tout ou partie de ces étapes (TRA, INF, LIM, PAR), et ces étapes (TRA, INF, LIM, PAR) peuvent être ajoutées au mode de réalisation illustré en figure 1.

Selon un deuxième mode de réalisation de l'invention, le procédé peut comprendre une étape supplémentaire de comparaison soit de la vitesse optimale déterminée avec la vitesse réalisée par l'utilisateur, soit de l'énergie réellement consommée avec l'énergie consommée optimale déterminée à partir de la vitesse optimale, puis une étape supplémentaire de détermination d'un indicateur énergétique (dit indicateur d'éco-conduite) obtenu au moyen de la comparaison. Cet indicateur peut être affiché en destination du conducteur.

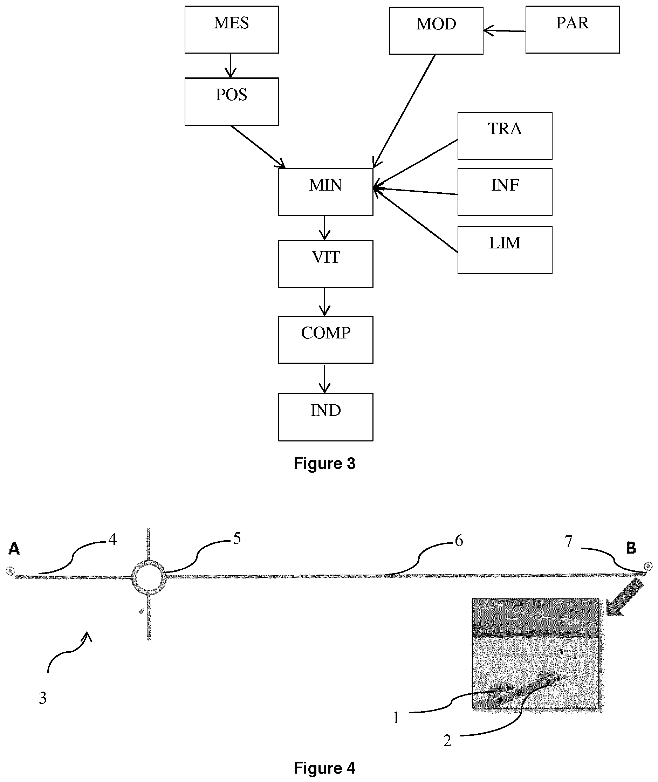

La figure 3 illustre, schématiquement et de manière non limitative, les étapes du procédé selon le deuxième mode de réalisation de l'invention. En plus des étapes décrites en relation avec la figure 1, le procédé comporte les étapes facultatives suivantes :

- détermination du trafic routier (TRA), la détermination du trafic peut servir à la détermination de la vitesse optimale par minimisation de l'énergie consommée (MIN),
- détermination des infrastructures routières (INF), la détermination des infrastructures routières peut servir à la détermination de la vitesse optimale par minimisation de l'énergie consommée (MIN),
- détermination des limitations de vitesse (LIM), la détermination des limitations de vitesse peut servir à la détermination de la vitesse optimale par minimisation de l'énergie consommée (MIN),
- détermination des paramètres intrinsèques du véhicule (PAR), ces paramètres peuvent servir à la construction du modèle dynamique (MOD),
- comparaison de la vitesse optimale déterminée (VIT) avec une vitesse réalisée (COMP) ou comparaison de l'énergie optimale liée à la vitesse optimale (VIT) avec l'énergie réellement consommée,
- détermination d'un indicateur d'éco-conduite (IND) sur la base de la comparaison (COMP).

Les étapes de détermination du trafic routier (TRA), des infrastructures routières (INF), des limitations de vitesse (LIM) et des paramètres intrinsèques du véhicule (PAR) sont indépendantes. Il est donc possible de réaliser seulement une partie de ces étapes. De plus, ces étapes ne sont pas liées aux étapes de comparaison (COMP) et de détermination d'un indicateur (IND). En d'autres termes, les étapes de comparaison (COMP) et de détermination d'un indicateur (IND) peuvent être réalisées sans ou avec tout ou partie de ces étapes (TRA, INF, LIM, PAR), et ces étapes (TRA, INF, LIM, PAR) peuvent être ajoutées au mode de réalisation illustré en figure 1.

Toutes les étapes du procédé, y compris leurs variantes proposées sur les figures 2 et 3 sont décrites ci-dessous.

## 1) Mesure de la distance, de la vitesse, de l'accélération du deuxième véhicule (MES)

Lors de cette étape, on mesure, en temps réel :

- la distance séparant le premier véhicule et le deuxième véhicule,
- la vitesse du deuxième véhicule, et
- l'accélération du deuxième véhicule.

Selon l'invention, ces mesures sont réalisées par au moins un capteur installé dans le premier véhicule. Le capteur peut être une caméra, un radar, un lidar, etc. Ces capteurs peuvent être redondants, notamment au sein d'un véhicule autonome, afin d'améliorer la sécurité.

Selon une autre mise en œuvre de l'invention, la position et la distance peuvent être obtenues au moyen d'au moins un capteur, et la vitesse et l'accélération peuvent être calculées à partir de la position et de la distance.

## 2) Détermination de la trajectoire du deuxième véhicule (POS)

Lors de cette étape, on détermine, en temps réel, la trajectoire du deuxième véhicule au moyen des mesures réalisées à l'étape précédente. En d'autres termes, on détermine la position du deuxième véhicule sur la route.

Selon l'invention, on détermine la trajectoire du deuxième véhicule au moyen d'une équation du type :
$s_{Leader} = s + \Delta s + v_{Leader}t + 1/2\, a_{Leader}t^2$ avec $s_{Leader}$ la position du deuxième véhicule, s la position du premier véhicule, $\Delta s$ la distance mesurée entre ledit premier véhicule et ledit deuxième véhicule, t le temps, $v_{Leader}$ la vitesse mesurée dudit deuxième véhicule et $a_{Leader}$ l'accélération mesurée dudit deuxième véhicule.

Pour le procédé selon l'invention, la position s du premier véhicule peut être mesurée, notamment à l'aide d'un système de géolocalisation (GPS). De plus, on peut mesurer la vitesse du premier véhicule, notamment au moyen d'un système de géolocalisation (GPS).

## 3) Construction du modèle dynamique du premier véhicule (MOD)

Lors de cette étape, on construit un modèle dynamique du véhicule du premier véhicule. On appelle modèle dynamique du véhicule, un modèle qui relie l'énergie consommée par le véhicule à la vitesse et à l'accélération du véhicule. Le modèle dynamique du véhicule peut être construit au moyen du principe fondamental de la dynamique, associé à un modèle énergétique de la motorisation.

Selon une mise en œuvre de l'invention (cf. étape de détermination des paramètres intrinsèques du véhicule de la figure 2), le modèle peut être construit à partir de paramètres macroscopiques du véhicule, par exemple : motorisation du véhicule, masse du véhicule, puissance maximale, vitesse maximale, type de transmission, paramètres aérodynamiques, etc.. Ainsi, le modèle dynamique est représentatif du véhicule, et prend en compte ses caractéristiques spécifiques.

Selon une variante de réalisation, les paramètres macroscopiques peuvent être obtenus depuis une base de données, qui répertorie les différents véhicules en circulation. Par exemple, les paramètres macroscopiques peuvent être obtenus en indiquant le numéro d'immatriculation du véhicule, la base de données associant le numéro de plaque à sa conception (marque, modèle, motorisation...), et comprenant les paramètres macroscopiques du véhicule.

Alternativement, les paramètres macroscopiques peuvent être des données constructeurs renseignées par l'utilisateur, en particulier au moyen d'une interface (par exemple un téléphone intelligent, le tableau de bord, ou un système de géolocalisation).

Le modèle dynamique du véhicule peut également dépendre de paramètres de la route, tels que la pente de la route. De telles données peuvent être obtenues à partir d'une topologie ou d'une cartographie du réseau routier.

Si aucune perte dans la transmission et aucun glissement sur les roues ne sont présents, le modèle de transmission peut être écrit comme suit :

$$F_t = \frac{T_m \eta_t^{sign(T_m)} R_t}{r}, \qquad \omega_m = \frac{vR_t}{r}$$

Où $F_t$ est la force de traction, $R_t$ et $\eta_t$ sont respectivement le rapport de transmission et le rendement de transmission, $T_m$ est le couple moteur (électrique, thermique, ou hybride par la combinaison des deux), $v$ est la vitesse longitudinale, r est le rayon de roue, et $\omega_m$ est la vitesse de rotation du moteur.

De la troisième loi de Newton (c'est-à-dire le principe fondamental de la dynamique), le modèle de la dynamique longitudinale du véhicule peut être exprimé en utilisant des forces résistives (aérodynamique $F_a$, roulement $F_r$, et gravitationnelle $F_g$) et la force de freinage mécanique, $F_b$, comme suit :

$$\dot{s} = v$$

$$m\dot{v} = F_t - F_a - F_r - F_g - F_b$$

$$m\dot{v} = \frac{R_t}{r} T_m \eta_t^{sign(T_m)} - \frac{1}{2} \rho_a A_f c_d v^2 - mgc_r - mgsin\big(\alpha(s)\big) - F_b$$

où m est la masse du véhicule, $\rho_a$ la densité de l'air, $A_f$ la surface frontale du véhicule, $c_d$ le coefficient de résistance aérodynamique, $c_r$ le coefficient de résistance au roulement, $\alpha(s)$ la pente de la route en fonction de la position, et g l'accélération de la gravité. La variable de contrôle est définie comme le couple moteur demandé $u = T_m$.

4) Détermination de la vitesse optimale (MIN, VIT)

Lors de cette étape, on détermine, en temps réel et de manière prédictive, la vitesse optimale du premier véhicule, cette vitesse optimale :

- minimise l'énergie consommée, et
- prend en compte la trajectoire du deuxième véhicule.

Ainsi, le procédé selon l'invention permet de minimiser l'énergie consommée tout en prenant en compte les conditions de circulation et tout en évitant les risques de collision avec le deuxième véhicule.

Pour cela, la détermination de la vitesse optimale peut être réalisée par une méthode de minimisation qui est contrainte par la trajectoire du deuxième véhicule.

Conformément à une mise en œuvre de l'invention, la méthode de minimisation peut être contrainte en outre par au moins une des conditions suivantes :

- les limitations de vitesse de la route sur laquelle circule le premier véhicule (et a fortiori le deuxième véhicule),
- les conditions de trafic, et
- l'infrastructure routière, c'est-à-dire le type de route (route de ville, autoroute, etc.) et moyens de régulation de la circulation (rond-point, intersection, feux tricolores, etc.).

La prise en compte de ces conditions permet de déterminer une vitesse optimale qui correspond réellement au trajet du véhicule, et permet d'accroître l'aspect sécuritaire obtenu par la vitesse optimale.

Avantageusement, les informations sur les limitations de vitesse, conditions de trafic et l'infrastructure routière peuvent être obtenues en temps réel par communication avec des services de données en ligne (de l'anglais webservices).

De plus, la méthode de minimisation peut être contrainte par une distance de sécurité entre le premier véhicule et le deuxième véhicule. Cette distance de sécurité peut être dépendante de la vitesse, de l'infrastructure routière, des conditions de trafic. Cette contrainte permet également d'augmenter le caractère sécuritaire obtenu par la vitesse optimale, en évitant le risque de collision avec le deuxième véhicule.

Selon un mode de réalisation de l'invention, la méthode de minimisation utilisée est une approche du type MPC. Le principe de cette technique est d'utiliser un modèle dynamique du processus à l'intérieur du contrôleur en temps réel afin d'anticiper le futur comportement du procédé. En anglais, on utilise le terme MPC ou MBPC pour qualifier la commande prédictive : Model (Based) Prédictive Control.

Pour cela, les horizons spatial et temporel peuvent être divisés en n pas de contrôle Tc. A chaque pas une commande optimale est mise à jour et appliquée en fonction des nouvelles mesures du deuxième véhicule. L'horizon spatial peut être calculé entre la position actuelle du véhicule et le point d'arrêt suivant. L'horizon temporel peut être récupéré via un « web service » qui prend en compte les conditions de trafic.

Le point d'arrêt suivant est le prochain obstacle lié à l'infrastructure qui va contraindre à ralentir. Il peut être estimé à partir d'un système d'information cartographique (il s'agit par exemple de la prochaine intersection, feu de signalisation ou passage piéton). Cette information peut être renforcée par un capteur de type caméra ou par une communication avec l'infrastructure.

L'efficacité des systèmes de commande prédictive est liée à la nature des modèles de prédiction utilisés ou à la valeur de l'horizon de contrôle. Plus la prédiction est précise ou l'horizon petit, plus la solution sera fiable. La présente invention utilise un modèle simple de prédiction qui risque de dégrader la qualité de l'optimisation. Néanmoins, étant donné que le temps de calcul de la solution à chaque pas est négligeable, car elle est analytique, l'horizon de contrôle peut être suffisamment court afin de garantir une performance quasi-optimale.

Selon un mode de réalisation de l'invention, pour ce problème d'optimisation, on peut réaliser la démarche décrite ci-dessous.

La consommation énergétique peut se déduire de la puissance, qui est fonction du couple u et la vitesse v du premier véhicule :

$$P_{source} = g(u, v)$$

Les contraintes du problème peuvent être données par les limitations de vitesse et la trajectoire prédite du deuxième véhicule (déterminée à l'étape 2).

On peut déterminer l'énergie optimale par minimisation d'une fonction J, du type

$$\min_u J = \int_0^T P_{source}(u, v)dt,$$

sujet à :

$$\dot{x} = f(x, u, t)$$

$$h(x, t) \le 0$$

$$u \in U, x \in X$$

$$s(t_0) = 0, \qquad s(T) = s_f$$

$$v(t_0) = v_0, \qquad v(T) = v_f$$

avec :

$$u = [T_m, F_b]$$
$$x = [s, v]$$

$$f = \left[ v, h_1 T_m \eta_t^{sign(T_m)} - h_2 v^2 - h_0 - F_b \right]$$

$$h^{(p)} = [s - s_{Leader}, v - v_{max}]$$

et :

$$h_1 = \frac{R_t}{rm},$$

$$h_2 = \frac{1}{2m}\rho_a A_f c_d$$

$$h_0 = gc_r + g\sin(\alpha(s)),$$

Afin de résoudre le problème présenté précédemment, deux méthodes sont généralement utilisées, la méthode adjacente directe et la méthode adjacente indirecte. Pour ce mode de réalisation de l'invention, la méthode indirecte peut être appliquée comme suit.

Etant donné la présence des contraintes, peuvent être définis :

$$H(u,x,\lambda,t) = P_{source}(u,v) + \lambda^T f(u,x,t)$$

$$L(u,x,\lambda,t) = H(u,x,\lambda,t) + \eta^T h^{(p)}(u,x)$$

où p est l'ordre de la contrainte d'état, qui est défini comme le nombre de différentiations successives de h jusqu'à l'apparition explicite du contrôle.

Les conditions d'optimalité peuvent être :

$$u^*(t) = \text{argmin}_u H(u^*,x^*,\lambda^*,t),$$

$$\dot{x}^*(t) = \partial L\,(u^*,x^*,\lambda^*,\eta^*,t)/\partial\lambda\,,$$

$$\dot{\lambda}^*(t) = \partial L\,(u^*,x^*,\lambda^*,\eta^*,t)/\partial x\,,$$

$$\eta^*(t).h^{(p)}(u^*,x^*,t) = 0, \qquad \eta^*(t) \geq 0$$

A cause de la présence de possibles sauts dans la solution, les temps de jonction peuvent satisfaire :

$$\Psi(x,t) \doteq \begin{bmatrix} h^{(0)}(x,t) \\ h^{(1)}(x,t) \\ \vdots \\ h^{(p-1)}(x,t) \end{bmatrix}$$

$$\lambda^*(\tau^-)^T = \lambda^*(\tau^+)^T + \sum_{j=0}^{p-1} \eta_j.h_{x^*}^{(j)}(x^*,\tau),$$

$$H^o(\tau^-) = H^o(\tau^+) - \sum_{j=0}^{p-1} \eta_j.h_t^{(j)}(x^*,\tau),$$

Où $\tau$ est le temps de saut de la solution et $\eta_j$ les composantes du multiplicateur de Lagrange $\eta$.

L'ensemble des équations décrites ci-dessus permet de trouver une solution analytique au problème formulé.

Ainsi, on détermine, en temps réel, une vitesse optimale énergétiquement, tout en prenant compte le comportement du deuxième véhicule, et tout en maintenant une sécurité élevée.

5) Contrôle du premier véhicule

Il s'agit d'une étape facultative correspondant au deuxième mode de réalisation de l'invention illustré en figure 2.
Lors de cette étape, on contrôle, en temps réel, le premier véhicule en fonction de la vitesse optimale déterminée à l'étape 4. En d'autres termes, on applique la vitesse optimale déterminée au premier véhicule. Cette vitesse optimale permet de minimiser l'énergie consommée par le premier véhicule tout en assurant des conditions de sécurité élevées.
Pour cela, on peut commander le groupe motopropulseur du premier véhicule. Il peut s'agir notamment d'un moteur thermique, d'une machine électrique ou d'un système hybride.
Ce mode de réalisation est particulièrement adapté pour un véhicule autonome.

5') Comparaison de la vitesse optimale déterminée avec la vitesse réalisée (COMP)

Il s'agit d'une étape facultative correspondant à la première étape supplémentaire du troisième mode de réalisation de l'invention illustré en figure 3.
Cette étape est réalisée à la fin d'une portion de route, sur laquelle le premier véhicule a circulé. Lors de cette étape, on compare la vitesse optimale déterminée à l'étape 4 avec la vitesse réalisée (mesurée) par le véhicule.
Alternativement, lors de cette étape, on peut comparer l'énergie consommée optimale liée à la vitesse optimale, et l'énergie réellement consommée par le premier véhicule.

6') Détermination d'un indicateur d'éco-conduite (IND)

Il s'agit d'une étape facultative correspondant à la deuxième étape supplémentaire du troisième mode de réalisation de l'invention illustré en figure 3.
Lors de cette étape, on détermine au moins un indicateur d'éco-conduite au moyen de la comparaison réalisée à l'étape 5'.
Selon un aspect de l'invention, l'indicateur d'éco-conduite peut être la différence entre l'énergie réellement consommée par le premier véhicule et l'énergie correspondant à la vitesse optimale déterminée.
Alternativement, l'indicateur d'éco-conduite peut être un ratio entre l'énergie consommée par le premier véhicule et l'énergie correspondant à la vitesse optimale déterminée.
Une fois le ou les indicateurs énergétiques déterminés, on peut transmettre cette information au conducteur au moyen d'un affichage. Cet affichage peut être réalisé à bord du véhicule : sur le tableau de bord, sur un dispositif portatif autonome, tel qu'un appareil de géolocalisation (de type GPS), un téléphone portable (de type téléphone intelligent, traduction de l'anglicisme smartphone). Il est également possible d'afficher cet indicateur sur un site internet, que le conducteur peut consulter postérieurement à sa conduite.
Le procédé selon l'invention peut être utilisé pour les véhicules automobiles. Toutefois, il peut être utilisé dans le domaine du transport routier, le domaine des deux-roues, etc.
L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en œuvre du procédé tel que décrit ci-dessus, lorsque le programme est exécuté sur un ordinateur ou un téléphone portable ou tout système analogue.

Exemples d'application

Les caractéristiques et avantages du procédé selon l'invention apparaîtront plus clairement à la lecture des exemples d'application ci-après.
Pour les deux exemples d'application, on étudie le cas d'un véhicule électrique (pour le premier véhicule) afin d'illustrer l'application de l'invention sur un exemple donné.
Grâce au freinage récupératif du véhicule électrique, on peut faire l'hypothèse que le frein mécanique n'est pas utilisé ($F_b$ = 0), donc $u = T_m$ dans ce cas. Un modèle statique de la machine électrique DC est utilisé pour décrire la puissance à la source, qui correspond à la puissance électrique du moteur, $P_m$ dans ce cas.

$$P_{source} = P_m = V_a i_a = \omega_m u + \frac{R_a}{k^2} T_m^2 = b_1 uv + b_2 u^2$$

Où $V_a$, $i_a$ et $R_a$ sont respectivement la tension, le courant et la résistance. $k$ est la constante de vitesse, et $\omega_m$

est la vitesse de rotation du moteur. On peut noter que $V_a = i_a R_a + k\omega_m$ et $i_a = \frac{T_m}{k}$.

Pour les deux exemples ci-dessous, on considère le véhicule défini dans le tableau 1 :

Tableau 1 - paramètres du véhicule

| Description | Paramètre | Valeur |
|---|---|---|
| Masse du véhicule | $m$ | 1432 kg |
| Rayon de la roue | $r$ | 0.2820 m |
| Rapport de transmission | $Rt$ | 9.5900 |
| Efficacité | $\eta_t$ | 0.98 |
| Coefficient du modèle statique de la machine électrique | $b_1$ | 34.01 |
| Coefficient du modèle statique de la machine électrique | $b_2$ | 0.873 |
| Coefficient | $h_0$ | 185.43 |
| Coefficient | $h_2$ | 0.2996 |

Le premier cas d'étude correspond à une étude de simulation réalisée à l'aide d'un logiciel modélisant le trafic d'une ville à l'échelle microscopique. Ce logiciel permet notamment de simuler le comportement d'un véhicule non optimisé par la présente invention, afin d'estimer les gains.

Le scénario d'étude correspond au déplacement de deux véhicules entre un point A et un point B, passant par un rond-point et un feu rouge, perturbations de l'infrastructure non connues a priori par le procédé de détermination d'une vitesse à atteindre de la présente invention. L'intérêt de ce cas test est de mesurer les performances de l'invention dans des conditions de vie réelles. Le deuxième véhicule se déplace en suivant un profil Gipps (le modèle de Gipps est un modèle de voiture suivante, basé sur le comportement du conducteur et l'espérance de vie des véhicules dans un flux de trafic).

La figure 4 illustre schématiquement le déplacement des deux véhicules entre le point A et le point B. Sur cette route 3, un premier véhicule 1 suit un deuxième véhicule 2. La route 3 comprend un premier segment de route 4 entre le point A et un rond-point 5, le rond-point 5, un deuxième segment de route 6 entre le rond-point 5 et un feu 7 situé au point B.

Pour ce premier exemple, les paramètres de simulation sont définis dans le tableau 2 :

Tableau 2 - Paramètres de roulage et de simulation

| | Paramètre | Valeur |
|---|---|---|
| Distance totale | $D$ | 1000 m |
| Durée totale | $T$ | 80 s |
| Inter-distance initiale | $d$ | 100 m |
| Vitesse maximale | $V_{max}$ | 50 km/h |
| Vitesse initiale | $v_0$ | 0 km/h |
| Vitesse finale | $v$ | 50 km/h |
| Horizon de contrôle | $T_c$ | 0.1 s |

L'invention est comparée à deux autres approches, afin d'estimer ses performances :

1- une solution optimale trouvée via la méthode de pénalisation (BVP). Cette solution optimale permet de quantifier le potentiel de gain mais nécessite la parfaite connaissance de la trajectoire du deuxième véhicule a priori, ce qui n'est pas réaliste.

2- un profil standard non-éco-conduite, solution de référence, sans optimisation énergétique, cette solution étant calculée via le modèle de Gipps.

Dans tous les cas, le premier véhicule rattrape le deuxième véhicule, à l'inter distance entre les deux véhicules prés, à la fin du segment de route.

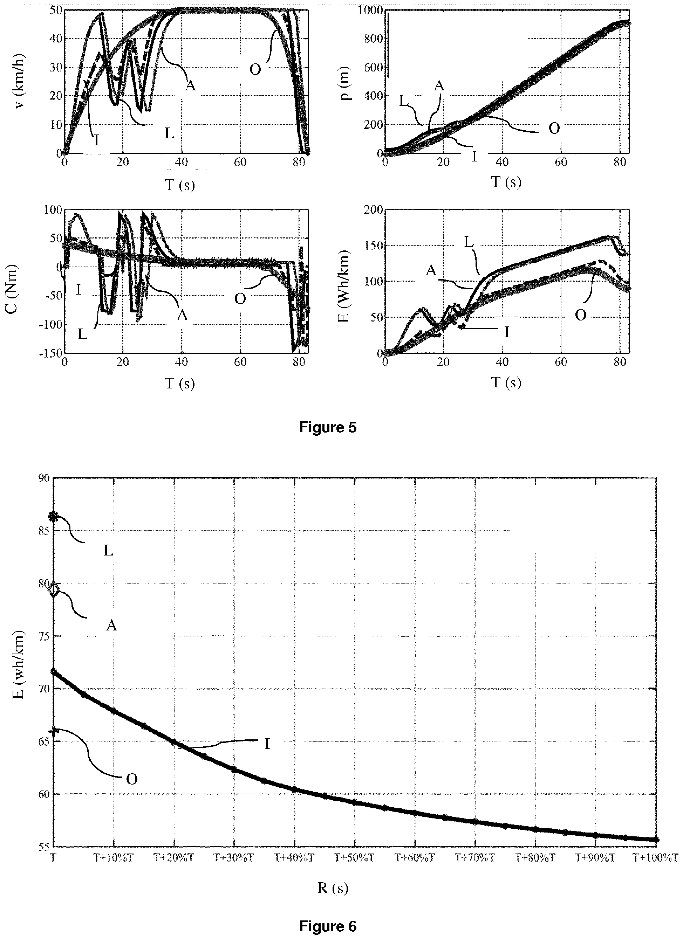

La figure 5 illustre plusieurs courbes de la vitesse du premier véhicule v (km/h), de la position du premier véhicule p (m), du couple moteur du premier véhicule C (Nm) et de l'énergie consommée E normalisée par la distance parcoure (Wh/km) par le premier véhicule. Sur ces courbes, les valeurs du deuxième véhicule sont indiquées L, les valeurs obtenues par la solution optimale BVP de l'art antérieur sont indiquées O, les valeurs obtenues par le profil standard de type Gipps non éco-conduite de l'art antérieur sont notées A, et les valeurs obtenues par le procédé selon l'invention sont notées I et sont illustrées par des traits pointillés.

Il est intéressant d'observer le comportement du procédé selon l'invention face à une perturbation dans le conduite du deuxième véhicule. La figure en haut à droite montre que le véhicule éco-conduite selon l'invention I arrive au rond-point (16 s) à une vitesse inférieure par rapport à la conduite non-éco A, ce qui rend l'accélération et les phases de décélération moins franches. Entre 40 s et 70 s tous les véhicules se comportent de la même façon, alors que lorsque le feu rouge approche, le véhicule éco-conduite selon l'invention I se prévoit une meilleure décélération en contraste avec la conduite non-éco selon l'art antérieur A. Sur la figure en haut à droite, il est observé que la contrainte imposée par la trajectoire du deuxième véhicule est respectée par le véhicule éco-conduite selon l'invention I, tandis que sur la figure en bas à gauche, on constate une meilleure limitation du couple avec le véhicule éco-conduite selon l'invention I. Enfin, sur la figure en bas à droite, les gains d'énergie, qui sont normalisés par la distance parcourue, sont présentés. Par rapport à la conduite non-éco selon l'art antérieur A, l'invention permet d'atteindre un gain énergétique de 31%. Ce gain significatif est dû à l'optimisation réalisée par la présente invention. De plus, il est intéressant de préciser que la consommation énergétique obtenue selon l'invention I est très proche de la valeur optimale O bien que la présente invention ne connaisse pas l'ensemble des perturbations a priori comme l'approche BVP.

Comme énuméré dans les avantages, l'invention permet de régler le compromis entre temps de parcours et consommation énergétique. Ce compromis est illustré sur la figure 6. Les points de la courbe situés sur l'origine des abscisses représentent le cas de la figure 5. Sur ces courbes, les valeurs du deuxième véhicule sont indiquées L, les valeurs obtenues par la solution optimale BVP de l'art antérieur sont indiquées O, les valeurs obtenues par le profil standard non éco-conduite de l'art antérieur sont notées A, et les valeurs obtenues par le procédé selon l'invention sont notées I et sont illustrées par une ligne continue noire.

Comme attendu, quand le premier véhicule se déplace plus lentement, il gagne en énergie. Par exemple, en le laissant arriver 10% plus tard (8 s plus tard que le deuxième véhicule), 5% du gain est obtenu.

Le deuxième exemple d'application correspond à un roulage réel sur une route nationale. Ce profil de vitesse est utilisé comme profil suivi par le deuxième véhicule. L'objectif est d'illustrer la réponse de l'invention lorsque l'accélération du deuxième véhicule varie, afin de tester l'hypothèse d'accélération constante du deuxième véhicule.

Pour ce deuxième exemple, les paramètres de simulation sont définis dans le tableau 3 :

Tableau 3 - Paramètres de roulage et de simulation

|  | Paramètre | Valeur |
|---|---|---|
| Distance totale | $D$ | 1073 m |
| Durée totale | $T$ | 142 s |
| Inter-distance initiale | $d$ | 75 m |
| Vitesse maximale | $V_{max}$ | 50 km/h |
| Vitesse initiale | $v_0$ | 0 km/h |
| Vitesse finale | $v_f$ | 0 km/h |
| Horizon de contrôle | $T_c$ | 0.1 s |

L'horizon de prédiction (temps moyen mis pour parcourir le segment de route considéré) est fourni par un webservice cartographique.

La figure 6 illustre plusieurs courbes de la vitesse du premier véhicule v (km/h), et de l'énergie consommée E (Wh/km) normalisée par la distance parcourue par le premier véhicule. Sur ces courbes, les valeurs du deuxième véhicule sont indiquées L, les valeurs obtenues par la solution optimale BVP de l'art antérieur sont indiquées O, les valeurs obtenues par le profil standard de type Gipps non éco-conduite de l'art antérieur sont notées A, et les valeurs obtenues par le procédé selon l'invention sont notées I et sont illustrées par une ligne continue noire.

Sur la figure du haut, on observe que le deuxième véhicule L suit un profil d'accélération présentant de fortes dynamiques qui peuvent réduire les gains potentiels de consommation énergétique en réduisant le degré de liberté du premier véhicule. Toutefois, l'approche proposée I filtre certaines de ces dynamiques, en particulier dans les phases d'accélération et de décélération. Néanmoins, entre 70 et 130 s, le procédé selon l'invention I offre des dynamiques comparables à celles du deuxième véhicule L. Cela est dû au manque de visibilité du comportement futur du deuxième véhicule L. Lors de l'étude du profil optimal O, on observe un résultat qui semble un filtrage du résultat éco-conduite où les variabilités d'accélération sont éliminées. Quant à l'approche Gipps A selon l'art antérieur, on observe une phase d'accélération forte jusqu'au moment où il suit le profil du deuxième véhicule.

La figure du bas montre des résultats énergétiques intéressants. Comme prévu, l'approche BVP O fournit la meilleure solution, suivie de l'approche selon l'invention I, puis par l'approche Gipps A selon l'art antérieur, et enfin par l'énergie du deuxième véhicule. Le tableau 4 montre les pertes énergétiques par rapport à l'approche BVP.

Tableau 4 - Résultats en terme de gain énergétique

| Solution | Energie consommée Wh/km | % par rapport au BVP |
|---|---|---|
| Gipps | 79.37 | 20.43 |
| Procédé selon l'invention | 71.56 | 8.60 |
| BVP | 65.90 | - |

Ainsi, le procédé selon l'invention permet de déterminer une vitesse à atteindre pour le premier véhicule qui minimise l'énergie consommée (ce qui n'est pas le cas de l'approche Gipps), tout en prenant en compte le comportement du véhicule qui le précède (ce qui n'est pas le cas de l'approche BVP), et tout en évitant les risques de collision.

**Revendications**

1. Procédé de détermination d'une vitesse à atteindre pour un premier véhicule (1), le premier véhicule (1) étant précédé sur la route (3) par un deuxième véhicule (2), le procédé comprenant les étapes suivantes :

   a) on mesure (MES) la distance, la vitesse et l'accélération dudit deuxième véhicule (2) précédant ledit premier véhicule (1) par au moins un capteur installé dans le premier véhicule ;
   b) on détermine la trajectoire (POS) dudit deuxième véhicule (2) au moyen desdites mesures (MES) en déterminant sa position au moyen d'une équation du type : $s_{Leader} = s + \Delta s + v_{Leader}t + 1/2\ a_{Leader}t^2$ avec $s_{Leader}$ la position dudit deuxième véhicule (2), s la position mesurée dudit premier véhicule (1), $\Delta s$ la distance entre ledit premier véhicule (1) et ledit deuxième véhicule (2), t le temps, $v_{Leader}$ la vitesse mesurée dudit deuxième véhicule (2) et $a_{Leader}$ l'accélération mesurée dudit deuxième véhicule (2) ;
   c) on construit un modèle dynamique (MOD) dudit premier véhicule (1) qui relie l'énergie consommée par ledit premier véhicule (1) à la vitesse dudit premier véhicule (1) ; et
   d) on détermine une vitesse (VIT) optimale à atteindre par ledit premier véhicule (1) par minimisation (MIN) de l'énergie consommée par ledit premier véhicule (1), au moyen dudit modèle dynamique (MOD), la minimisation de l'énergie consommée étant contrainte par ladite trajectoire (POS) dudit deuxième véhicule (2).

2. Procédé selon la revendication 1, dans lequel on détermine la vitesse (VIT) optimale dudit premier véhicule (1) par une approche du type MPC.

3. Procédé selon la revendication 2, dans lequel ladite approche de type MPC est réalisée sur un horizon temporel déterminé en prenant en compte les conditions de trafic.

4. Procédé selon l'une des revendications précédentes, dans lequel la minimisation de l'énergie consommée est contrainte par les conditions de trafic (TRA) et/ou par les limitations de vitesse (LIM) et/ou par l'infrastructure routière (INF), sur laquelle circule ledit premier véhicule (1).

5. Procédé selon l'une des revendications 3 ou 4, dans lequel lesdites conditions de trafic (TRA), les limitations de vitesse (LIM) et/ou l'infrastructure routière (INF) sont obtenues en temps réel par communication avec des services de données en ligne.

6. Procédé selon l'une des revendications précédentes, dans lequel la minimisation est contrainte par une distance de sécurité entre ledit premier véhicule (1) et ledit deuxième véhicule (2).

7. Procédé selon l'une des revendications précédentes, dans lequel le procédé comprend une étape de contrôle (CON) dudit premier véhicule (1) avec ladite vitesse optimale (VIT).

8. Procédé selon la revendication 7, dans lequel ledit premier véhicule (1) est un véhicule autonome.

9. Procédé selon l'une des revendications 1 à 6, dans lequel le procédé comprend une étape de comparaison (COMP) soit entre la vitesse optimale (VIT) déterminée et la vitesse atteinte par le conducteur dudit premier véhicule (1), soit entre l'énergie optimale déterminée au moyen de la vitesse optimale (VIT) et l'énergie consommée par le premier véhicule, et une étape de détermination d'un indicateur (IND) de conduite énergétique au moyen de ladite comparaison (COMP).

10. Procédé selon l'une des revendications précédentes, dans lequel on détermine l'énergie optimale par minimisation d'une fonction J, de la forme $J = \int_0^T P_{source}(u, v)dt$ avec $P_{source}$ la puissance fournie par le moteur dudit premier véhicule (1), u le couple fourni par le moteur dudit premier véhicule (1), et v la vitesse dudit premier véhicule (1).

11. Procédé selon l'une des revendications précédentes, dans lequel le modèle dynamique (MOD) dudit premier véhicule (1) s'écrit de la forme: $m\dot{v} = F_t - F_a - F_r - F_g - F_b$ avec m la masse dudit premier véhicule (1), $F_t$ la force de traction, $F_a$ la force aérodynamique, $F_r$ la force de roulement, $F_g$ la force gravitationnelle, et $F_b$ la force de freinage mécanique.

12. Procédé selon l'une des revendications précédentes, dans lequel ledit modèle dynamique (MOD) du véhicule dépend de paramètres intrinsèques (PAR) dudit véhicule.

13. Procédé selon la revendication 12, dans lequel lesdits paramètres intrinsèques (PAR) dudit véhicule sont obtenus depuis une base de données, ou sont indiqués par un utilisateur.

14. Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des revendications précédentes, lorsque ledit programme est exécuté sur un ordinateur ou sur un téléphone portable.

**Patentansprüche**

1. Verfahren zur Bestimmung einer zu erreichenden Geschwindigkeit für ein erstes Fahrzeug (1), wobei dem ersten Fahrzeug (1) ein zweites Fahrzeug (2) auf der Straße (3) vorausfährt, wobei das Verfahren die folgenden Schritte umfasst:

   a) Es werden der Abstand, die Geschwindigkeit und die Beschleunigung des zweiten Fahrzeugs (2), das dem ersten Fahrzeug (1) vorausfährt, durch wenigstens einen im ersten Fahrzeug eingebauten Sensor gemessen (MES);
   b) es wird die Trajektorie (POS) des zweiten Fahrzeugs (2) mittels der Messungen (MES) bestimmt, indem seine Position mittels einer Gleichung des Typs $s_{Leader} = s + \Delta s + v_{Leader}t + 1/2\, a_{Leader}t^2$ bestimmt wird, wobei $s_{Leader}$ die Position des zweiten Fahrzeugs (2) ist, s die gemessene Position des ersten Fahrzeugs (1) ist, $\Delta s$ der Abstand zwischen dem ersten Fahrzeug (1) und dem zweiten Fahrzeug (2) ist, t die Zeit ist, $v_{Leader}$ die gemessene Geschwindigkeit des zweiten Fahrzeugs (2) ist und $a_{Leader}$ die gemessene Beschleunigung des zweiten Fahrzeugs (2) ist;
   c) es wird ein dynamisches Modell (MOD) des ersten Fahrzeugs (1) erstellt, welches die von dem ersten Fahrzeug (1) verbrauchte Energie mit der Geschwindigkeit des ersten Fahrzeugs (1) verknüpft; und
   d) es wird eine von dem ersten Fahrzeug (1) zu erreichende optimale Geschwindigkeit (VIT) durch Minimierung (MIN) der von dem ersten Fahrzeug (1) verbrauchten Energie mittels des dynamischen Modells (MOD) bestimmt, wobei die Minimierung der verbrauchten Energie Nebenbedingungen durch die Trajektorie (POS) des zweiten Fahrzeugs (2) unterliegt.

2. Verfahren nach Anspruch 1, wobei die optimale Geschwindigkeit (VIT) des ersten Fahrzeugs (1) durch einen Ansatz vom Typ MPC bestimmt wird.

3. Verfahren nach Anspruch 2, wobei der Ansatz vom Typ MPC auf einem Zeithorizont realisiert wird, der unter Berücksichtigung der Verkehrsbedingungen bestimmt wird.

4. Verfahren nach einem der vorhergehenden Ansprüche, wobei die Minimierung der verbrauchten Energie Nebenbedingungen durch die Verkehrsbedingungen (TRA) und/oder durch die Geschwindigkeitsbegrenzungen (LIM) und/oder durch die Straßeninfrastruktur (INF), auf welcher das erste Fahrzeug (1) fährt, unterliegt.

5. Verfahren nach einem der Ansprüche 3 oder 4, wobei die Verkehrsbedingungen (TRA), die Geschwindigkeitsbegrenzungen (LIM) und/oder die Straßeninfrastruktur (INF) in Echtzeit durch Kommunikation mit Online-Datendiensten erhalten werden.

6. Verfahren nach einem der vorhergehenden Ansprüche, wobei die Minimierung Nebenbedingungen durch einen Sicherheitsabstand zwischen dem ersten Fahrzeug (1) und dem zweiten Fahrzeug (2) unterliegt.

7. Verfahren nach einem der vorhergehenden Ansprüche, wobei das Verfahren einen Schritt der Steuerung (CON) des ersten Fahrzeugs (1) mit der optimalen Geschwindigkeit (VIT) umfasst.

8. Verfahren nach Anspruch 7, wobei das erste Fahrzeug (1) ein autonomes Fahrzeug ist.

9. Verfahren nach einem der Ansprüche 1 bis 6, wobei das Verfahren einen Schritt des Vergleichs (COMP) entweder zwischen der bestimmten optimalen Geschwindigkeit (VIT) und der vom Fahrer des ersten Fahrzeugs (1) erreichten Geschwindigkeit oder zwischen der mittels der optimalen Geschwindigkeit (VIT) bestimmten optimalen Energie und der von dem ersten Fahrzeug verbrauchten Energie und einen Schritt der Bestimmung eines Indikators (IND) der energiesparenden Fahrweise mittels des Vergleichs (COMP) umfasst.

10. Verfahren nach einem der vorhergehenden Ansprüche, wobei die optimale Energie durch Minimierung einer Funktion J der Form $J = \int_0^T P_{source}(u,v)\,dt$ bestimmt wird, wobei $P_{source}$ die vom Motor des ersten Fahrzeugs (1) gelieferte Leistung, u das vom Motor des ersten Fahrzeugs (1) gelieferte Drehmoment und v die Geschwindigkeit des ersten Fahrzeugs (1) ist.

11. Verfahren nach einem der vorhergehenden Ansprüche, wobei das dynamische Modell (MOD) des ersten Fahrzeugs (1) in der Form $m\dot{v} = F_t - F_a - F_r - F_g - F_b$ geschrieben wird, wobei m die Masse des ersten Fahrzeugs (1), $F_t$ die Zugkraft, $F_a$ die aerodynamische Kraft, $F_r$ die Rollkraft, $F_g$ die Schwerkraft und $F_b$ die mechanische Bremskraft ist.

12. Verfahren nach einem der vorhergehenden Ansprüche, wobei das dynamische Modell (MOD) des Fahrzeugs von intrinsischen Parametern (PAR) des Fahrzeugs abhängt.

13. Verfahren nach Anspruch 12, wobei die intrinsischen Parameter (PAR) des Fahrzeugs aus einer Datenbank erhalten werden oder von einem Benutzer angegeben werden.

14. Computerprogrammprodukt, das aus einem Kommunikationsnetz herunterladbar und/oder auf einem computerlesbaren Medium aufgezeichnet und/oder durch einen Prozessor oder einen Server ausführbar ist und Programmcodeanweisungen zur Durchführung des Verfahrens nach einem der vorhergehenden Ansprüche, wenn das Programm auf einem Computer oder auf einem Mobiltelefon ausgeführt wird, umfasst.

**Claims**

1. Method for determining a speed to be reached by a first vehicle (1), the first vehicle (1) being preceded on the road (3) by a second vehicle (2), the method comprising the following steps:

   a) the distance, speed and acceleration of said second vehicle (2) preceding said first vehicle (1) are measured (MES) by at least one sensor installed in the first vehicle;
   b) the path (POS) of said second vehicle (2) is determined by means of said measurements (MES) by determining its position by means of an equation of the type: $s_{Leader} = S + \Delta s + v_{Leader}t + 1/2 a_{Leader}t^2$ with $s_{Leader}$ the position of said second vehicle (2), s the measured position of said first vehicle (1), $\Delta s$ the distance between said first vehicle (1) and said second vehicle (2), $t$ time, $v_{Leader}$ the measured speed of said second vehicle (2) and $a_{Leader}$ the measured acceleration of said second vehicle (2);

c) a dynamic model (MOD) of said first vehicle (1), which relates the energy consumed by said first vehicle (1) to the speed of said first vehicle (1), is constructed; and

d) an optimal speed (VIT) to be reached by said first vehicle (1) is determined by minimizing (MIN) the energy consumed by said first vehicle (1), by means of said dynamic model (MOD), the minimization of the consumed energy being constrained by said path (POS) of said second vehicle (2).

2. Method according to Claim 1, wherein the optimal speed (VIT) of said first vehicle (1) is determined using an MPC approach.

3. Method according to Claim 2, wherein said MPC approach is realized over a time horizon set taking into account traffic conditions.

4. Method according to one of the preceding claims, wherein the minimization of the consumed energy is constrained by traffic conditions (TRA) and/or by speed limits (LIM) and/or by road infrastructure (INF), of the road on which said first vehicle (1) is being driven.

5. Method according to either of Claims 3 and 4, wherein said traffic conditions (TRA), speed limits (LIM) and/or road infrastructure (INF) are obtained in real time by communication with web services.

6. Method according to one of the preceding claims, wherein the minimization is constrained by a stopping distance between said first vehicle (1) and said second vehicle (2).

7. Method according to one of the preceding claims, wherein the method comprises a step (CON) of controlling said first vehicle (1) to said optimal speed (VIT).

8. Method according to Claim 7, wherein said first vehicle (1) is an autonomous vehicle.

9. Method according to one of Claims 1 to 6, wherein the method comprises a step (COMP) of comparing either the determined optimal speed (VIT) and the speed reached by the driver of said first vehicle (1), or the optimal energy determined by means of the optimal speed (VIT) and the energy consumed by the first vehicle, and a step of determining a driving-energy indicator (IND) by means of said comparison (COMP).

10. Method according to one of the preceding claims, wherein the optimal energy is determined by minimizing a function J, of the form $J = \int_0^T P_{source}(u, v)dt$ with $P_{source}$ the power delivered by the motor or engine of said first vehicle (1), $u$ the torque delivered by the motor or engine of said first vehicle (1), and $v$ the speed of said first vehicle (1).

11. Method according to one of the preceding claims, wherein the dynamic model (MOD) of said first vehicle (1) is written in the form: $m\dot{v} = F_t - F_a - F_r - F_g - F_b$ with $m$ the mass of said first vehicle (1), $F_t$ the traction force, $F_a$ the aerodynamic drag, $F_r$ the rolling drag, $F_g$ gravity, and $F_b$ the mechanical brake force.

12. Method according to one of the preceding claims, wherein said dynamic model (MOD) of the vehicle depends on intrinsic parameters (PAR) of said vehicle.

13. Method according to Claim 12, wherein said intrinsic parameters (PAR) of said vehicle are obtained from a database, or are indicated by a user.

14. Computer-program product downloadable from a communication network and/or stored on a medium which is readable by computer and/or executable by a processor or a server, comprising program-code instructions for implementing the method according to one of the preceding claims, when said program is executed on a computer or on a mobile telephone.

```
┌─────────┐              ┌─────────┐
│   MES   │              │   MOD   │
└────┬────┘              └────┬────┘
     │                        │
     ▼                        │
┌─────────┐                   │
│   POS   │                   │
└────┬────┘                   │
     │                        │
     └──────────┐   ┌─────────┘
                ▼   ▼
             ┌─────────┐
             │   MIN   │
             └────┬────┘
                  │
                  ▼
             ┌─────────┐
             │   VIT   │
             └─────────┘
```

**Figure 1**

```
┌─────────┐        ┌─────────┐      ┌─────────┐
│   MES   │        │   MOD   │ ◄────│   PAR   │
└────┬────┘        └────┬────┘      └─────────┘
     │                  │
     ▼                  │
┌─────────┐             │           ┌─────────┐
│   POS   │             │           │   TRA   │
└────┬────┘             │           └─────────┘
     │                  │
     └────────┐  ┌──────┘           ┌─────────┐
              ▼  ▼         ◄─────────│   INF   │
           ┌─────────┐ ◄──           └─────────┘
           │   MIN   │ ◄────────┐
           └────┬────┘          └──┌─────────┐
                │                  │   LIM   │
                ▼                  └─────────┘
           ┌─────────┐
           │   VIT   │
           └────┬────┘
                │
                ▼
           ┌─────────┐
           │   CON   │
           └─────────┘
```

**Figure 2**

Figure 3

Figure 4

Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2994923
- US 9286737 B
- DE 102011002275 A1
- EP 2219092 A
- US 54487479 B

**Littérature non-brevet citée dans la description**

- Model Prédictive Control of Vehicles on Urban Roads for Improved Fuel Economy. **MD ABDUS SAMAD KAMAL et al.** IEEE TRANSACTIONS ON CONTROL SYSTEMS TECHNOLOGY. IEEE SERVICE CENTER, 01 Mai 2013, vol. 2 1, 831-841
- Optimal Ecodrrving Control :.Energy-Efficient Driving of Road Vehicles as an Optimal Control Problem. **SCIARRETTA ANTONIO et al.** IEEE CONTROL SYSTEMS. IEEE, 01 Octobre 2015, vol. 35, 71-90